# FASCICULE DE BREVET EUROPEEN

(11) **EP 3 359 816 B1**
(45) Date de publication et mention de la délivrance du brevet: **11.10.2023**
(21) Numéro de dépôt: 15781023.5
(22) Date de dépôt: 24.07.2015
(51) Int. Cl.: F04B 27/02, B60T 17/02, F04B 39/00, F04B 39/06

(54) **COMPRESSEUR FERROVIAIRE A PISTONS SEC FERME AVEC UN CAISSON DE PROTECTION ET D'INSONORISATION**
GESCHLOSSENER TROCKENKOLBEN-BAHNKOMPRESSOR MIT SCHALLDÄMMENDEM SCHUTZGEHÄUSE
CLOSED DRY-PISTON RAILWAY COMPRESSOR COMPRISING A PROTECTIVE SOUNDPROOFING HOUSING

(43) Date de publication de la demande: 15.08.2018
(73) Titulaire: Del Barba, Willy, 83300 Draguignan (FR)
(72) Inventeur: Del Barba, Willy, 83300 Draguignan (FR)
(74) Mandataire: Loyer & Abello
(86) Numéro de dépôt international: PCT/EP2015/001538
(87) Numéro de publication internationale: WO 2017/016569

(56) Documents cités:
- EP-A1- 0 872 270
- DE-A1- 10 042 212
- DE-A1-102007 019 126
- US-A- 3 918 850
- US-A1- 2004 028 538

## Description

L'invention concerne un compresseur à pistons sec, compresseur n'utilisant pas d'huile, à destination du secteur ferroviaire, qui est entièrement capoté afin d'améliorer l'insonorisation et de le protéger des agents externes.

### ART ANTERIEUR

DE102007019126 décrit le préambule de la revendication 1.

EP0872270 décrit un radiateur muni d'un conduit de dérivation piloté par une vanne pour diriger l'air issu d'un compresseur d'une entrée vers l'autre afin de dégivrer le radiateur.

### RESUME INVENTION

Selon un premier aspect de l'invention, l'invention fournit un compresseur ferroviaire à pistons sec selon la revendication 1. Selon d'autres aspects de l'invention, le compresseur ferroviaire à pistons sec est défini tels que décrits dans les revendications dépendantes 2 à 4.

Ledit compresseur non lubrifié est fermé par un caisson (1) de surpression et d'insonorisation. Il est doté d'un ventilateur (2) en extrémité (entrée d'air) qui a l'avantage d'envoyer de l'air froid non réchauffé par un radiateur, sur les cylindres (5) et culasses (6).

La structure du compresseur est une structure moto-compresseur (7) autoportante. En effet il y a sur ce compresseur une absence de châssis permettant d'améliorer le poids et l'encombrement à puissance égale. Cette structure autoportante est composée du groupe moto-compresseur (7) et de deux parois (8) situées aux extrémités du groupe. Cet ensemble complet permet d'éviter de devoir mettre en sus un châssis.

Le radiateur (4) du compresseur est placé en sortie d'évacuation d'air du caisson ce qui a pour conséquence de souffler de l'air réchauffé sur le radiateur (4) et ainsi permet d'éviter la formation de glace par des températures très négatives due à la présence de condensats dans le radiateur.

Les cylindres (5) du compresseur à pistons sec sont disposés en « Y » ce qui permet ainsi de refroidir les cylindres (haute pression et basse pression) de façon identique.

Le compresseur au vu de cette invention à l'avantage d'avoir un encombrement (dimension, poids) optimal à puissance égale.

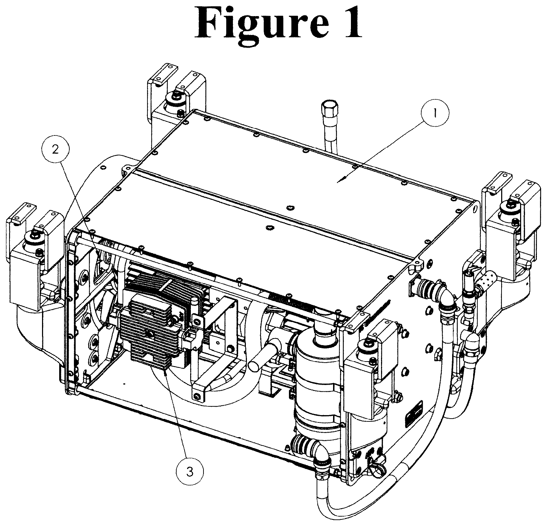

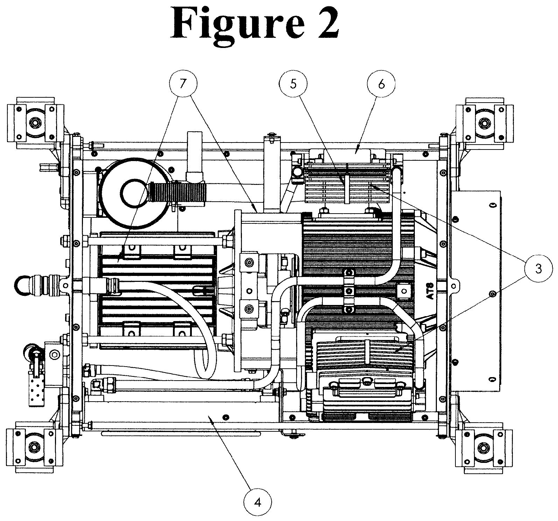

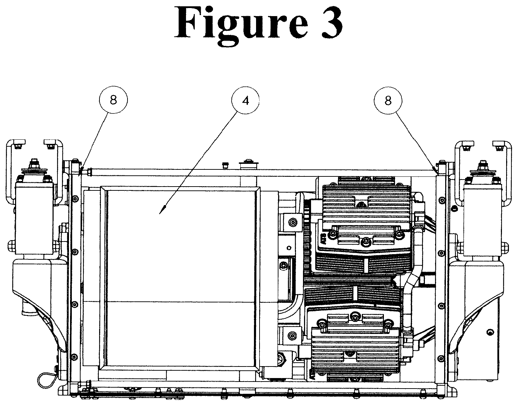

## Revendications

1. Compresseur ferroviaire à pistons sec comportant un caisson de protection (1), un ventilateur (2) en amont et **caractérisé en ce que** le ventilateur (2) permet de refroidir directement des têtes de compression (3), comprenant des cylindres (5) et des culasses (6), avec de l'air extérieur non réchauffé par un radiateur, le compresseur ferroviaire comprenant un radiateur (4) installé à la sortie d'évacuation d'air de refroidissement en extrémité du caisson de façon que la formation de bouchon de glace due à la présence de condensats dans le radiateur soit évitée.

2. Compresseur ferroviaire à pistons sec selon la revendication 1, qui se dote d'un caisson de surpression pour améliorer l'insonorisation et sans châssis ce qui allège le poids du groupe complet.

3. Compresseur à ferroviaire à pistons sec selon la revendication 2 pour lequel il n'y a pas de châssis mais une structure moto-compresseur (7) autoportante composée du groupe moto-compresseur (7) et de deux parois (8) situés aux extrémités du groupe. Cet ensemble complet permet d'éviter de devoir mettre un châssis supplémentaire.

4. Compresseur ferroviaire à pistons sec selon les revendications 1 à 3 se dotant d'une disposition de cylindres (5) en « Y » destinés à refroidir ces derniers de façon identique.

## Patentansprüche

1. Trockenkolben-Eisenbahnkompressor umfassend einen Schutzkasten (1), einen stromaufwärts angeordneten Lüfter (2) und **dadurch gekennzeichnet, dass** der Lüfter (2) die direkte Kühlung von Kompressionsköpfen (3), welche Zylinder (5) und Zylinderköpfe (6) umfassen, mit Außenluft, die nicht durch eine Heizung erwärmt wird, ermöglicht, wobei der Eisenbahnkompressor einen Kühler (4) umfasst, der am Kühlluftauslass am Ende des Gehäuses installiert ist, so dass die Bildung von Eispfropfen aufgrund von Kondensat in dem Kühler vermieden wird.

2. Trockenkolben-Eisenbahnkompressor gemäß Anspruch 1, der mit einem Überdruckgehäuse ausgestattet ist, um die Schalldämmung zu verbessern, und ohne Rahmen, was das Gewicht der kompletten Gruppe verringert.

3. Trockenkolben-Eisenbahnkompressor gemäß Anspruch 2, der keinen Rahmen, sondern eine selbstragende Motor-Kompressor Struktur (7) hat, bestehend aus der Gruppe Motor-Kompressor (7) und zwei Wänden, welche am Ende der Gruppe angeordnet sind. Dieses Komplettpaket ermöglicht es, zu verhindern, dass ein zusätzlicher Rahmen angebracht werden muss.

4. Trockenkolben-Eisenbahnkompressor gemäß den Ansprüchen 1 bis 3, der mit einer Anordnung der Zylinder (5) in «Y» ausgestattet ist, welche dazu bestimmt ist, diese in identischer Weise abzukühlen.

## Claims

1. Dry-piston railway compressor comprising a protective housing (1) and an upstream fan (2) and **characterised in that** the fan (2) allows direct cooling of the compression heads (3), comprising cylinders (5) and cylinder heads (6), with outside air not heated by a radiator, the railway compressor comprising a radiator (4) installed at the cooling air outlet at the end of the housing so that ice plug formation due to the presence of condensates in the radiator is prevented.

2. Dry-piston railway compressor according to claim 1 which is equipped with an overpressure housing to improve the soundproofing and has no chassis, thus reducing the weight of the complete unit.

3. Dry-piston railway compressor according to claim 2 for which there is no chassis but a self-supporting motor-compressor structure (7) composed of the motor-compressor unit (7) and two walls (8) located at the ends of the unit. This complete assembly avoids the need to install an additional chassis.

4. Dry-piston railway compressor according to claims 1 to 3 equipped with a "Y-shaped" arrangement of cylinders (5) intended to cool the cylinders in the same way.
